Europäisches Patentamt

European Patent Office

Office européen des brevets

(11) Veröffentlichungsnummer: **0 279 185**

**A1**

# EUROPÄISCHE PATENTANMELDUNG

(21) Anmeldenummer: **88100654.8**

(22) Anmeldetag: **19.01.88**

(51) Int. Cl.⁴ **C03B 35/18** , **F27D 3/02** , **F27B 9/24** , **B65G 39/02**

(30) Priorität: **14.02.87 DE 3704744**

(43) Veröffentlichungstag der Anmeldung:
**24.08.88 Patentblatt 88/34**

(84) Benannte Vertragsstaaten:
**AT BE ES FR GB IT LU NL SE**

(71) Anmelder: **Pose-Marre Edelstahlwerk GmbH**
**Gerberstrasse 26**
**D-4006 Erkrath(DE)**

(72) Erfinder: **Haite, Michael, Dipl.-Ing.**
**Heinrichstrasse 3**
**D-4006 Erkrath(DE)**

(74) Vertreter: **König, Reimar, Dr.-Ing. et al**
**Patentanwälte Dr.-Ing. Reimar König**
**Dipl.-Ing. Klaus Bergen Wilhelm-Tell-Strasse**
**14 Postfach 260162**
**D-4000 Düsseldorf 1(DE)**

(54) **Transportrolle für Glaskühlkanäle.**

(57) Um Verformungen aufgrund von Temperaturdifferenzen in Glaskühlkanälen zu vermeiden, ist bei einer Transportrolle das zwischen zwei Lagerzapfen (1) angeordnete zylindrische bzw. rohrförmige Mittelteil (6) axial verschiebbar in bezug auf die Lagerzapfen angeordnet.

Fig. 1

EP 0 279 185 A1

## "Transportrolle für Glaskühlkanäle"

Die Erfindung betrifft eine Transportrolle für Glaskühlkanäle aus zwei Lagerzapfen und einem dazwischen angeordneten zylindrischen Mittelteil.

Derartige Transportrollen werden in Glaskühlkanälen für die Flachglasherstellung verwendet.

Beim sogenannten Float-Verfahren wird die auf dem Zinnbad schwimmende Glaschicht über eine Walze abgehoben. Transportrollen führen das Glasband durch einen Kühlkanal zur Weiterverarbeitung. Um eine bestimmte Breite und Dicke des Bandes einzuhalten, ist ein bestimmter Temperaturverlauf beim Abkühlen des Glasbandes im Kühlkanal erforderlich. Dies gilt auch für andere Verfahren.

In denjenigen Kühlkanalzonen, in denen eine verhältnismäßig gleichmäßige Temperatur herrscht, lassen sich Transportrollen aus Metall verwenden; dessen Legierungszusammensetzung ist den Betriebsbedingungen hinsichtlich Oxydation bzw. Korrosion angepaßt. Es kommen ferritische, ferritisch-austenitische oder austenitische Stähle in Frage; der rohrförmige Rollen-Mittelteil wird in der Regel durch Schleudergießen hergestellt. Um eine optimale Glasqualität zu gewährlei sten, weist die Rollenoberfläche eine hohe Glätte, z.B. eine Rauhtiefe von Ra = 0,8 $\mu$m auf. Dementsprechend sind Poren oder Schlackeneinschlüsse nicht zulässig.

In denjenigen Bereichen des Glaskühlkanals, in denen eine ungleichmäßige Umgebungstemperatur herrscht, beispielsweise dort, wo eine starke Beaufschlagung des Glasbandes mit Kühlluft erforderlich ist, haben sich Rollen, deren Mittelteil mit dem Lagerzapfen starr verbunden ist und deren Oberfläche zylindrisch glatt ist, nicht bewährt. Temperaturunterschiede im Rollen-Mittelteil führen nämlich zu bogenförmigen Deformationen, die sich nach jeder Rollenumdrehung vergrößern.

Aus diesem Grunde werden in den Bereichen des Kühlkanals mit ungleichmäßiger Temperaturverteilung Transportrollen eingesetzt, deren Mittelteil mit Asbest beschichtet ist.

Eine andere Möglichkeit, eine Deformation der Transportrollen zu vermeiden, besteht darin, das Mittelteil aus mit Abstand voneinander angeordneten Scheiben zusammenzusetzen. Hierdurch ergibt sich zwar eine bessere Formstabilität der Transportrollen, auch bei stark ungleichmäßigen Temperaturen, jedoch besitzen Scheibenrollen den Nachteil, daß sich durch die Verminderung der Kontaktfläche die Flächenpressung vergrößert und es demzufolge zu Beschädigungen des Glasbandes kommen kann, die zwangsläufig mit der Dicke des Glases zunehmen.

Der Erfindung liegt daher die Aufgabe zugrunde, eine Transportrolle für Glaskühlkanäle zu - schaffen, die Verformungen aufgrund ungleichmäßiger Umgebungstemperaturen vermeidet oder zumindest stark vermindert.

Diese Aufgabe wird dadurch gelöst, daß bei einer Transportrolle der eingangs erwähnten Art erfindungsgemäß das rohrförmige Mittelteil wenigstens im Bereich eines der Lagerzapfen axial verschiebbar in bezug auf den Zapfen angeordnet ist. Die Lagerzapfen und das gleichsam schwimmende Mittelteil sind somit nicht mehr starr miteinander verbunden, sondern so, daß sich das allenfalls einseitig mit einem Zapfen verbundene Mittelteil für sich frei dehnen oder zusammenziehen kann. Somit können bei Temperaturdifferenzen keine unterschiedlichen Dehnungen im Mittelteil auftreten, die sich auf die Kontur des Mittelteils und auf die Rollenlänge und -lagerung auswirken.

Das Mittelteil kann über im Bereich seiner Enden bzw. Stirnseite angeordnete Stützringe oder sternförmige Abstützungen mit den Lagerzapfen verbunden sein. Vorzugsweise ist wenigstens eine der Abstützungen mit dem Mittelteil axial verschiebbar, aber drehfest verbunden.

Die Lagerzapfen können über eine durchgehende Tragwelle miteinander verbunden sein, wie dies bisher bei mit Asbest beschichteten Transportrollen bekannt war. Auf diese Weise lassen sich die Transportrollen ohne weiteres weiterverwenden, wenn die Asbestbeschichtung durch eine rohrförmiges Mittelteil ersetzt wird.

Das rohrförmige Mittelteil kann einen größeren Innendurchmesser als die Tragwelle aufweisen, so daß sich zwischen der durchgehenden Tragwelle und dem Mittelteil ein Ringraum ergibt, der entweder frei oder mit einem hitzebeständigen Isoliermaterial gefüllt sein kann. Durch diesen Ringraum wird die durch gehende Welle thermisch von dem Mittelteil isoliert, so daß sich die Welle auch bei wechselnden Temperaturen nicht verzieht.

Bei einer anderen Ausführung sind die Lagerzapfen nicht über eine durchgehende Tragwelle miteinander verbunden, sondern nur über das rohrförmige Mittelteil. Da dieses Mittelteil wegen seiner axialen Verschiebbarkeit auf wenigstens einem Lagerzapfen nicht zur axialen Führung der Lagerzapfen beiträgt, sind diese vorzugsweise unabhängig voneinander jeweils doppelt gelagert. Dabei kann der Durchmesser des Mittelteils auch gleich oder kleiner als der Zapfendurchmesser sein.

Eine weitere Maßnahme, ungleichmäßige Temperaturen im Rollen-Mittelteil zu vermeiden, besteht darin, die Oberfläche des Mittelteils zu mattieren bzw. mit einem Oxydfilm zu versehen, um die Wärmestrahlung zu vermindern.

Die Erfindung wird nachstehend anhand mehrerer in der Zeichnung dargestellter Ausführungsbeispiele des näheren erläutert. In der Zeichnung zeigen:

Fig. 1: einen Längsschnitt durch eine unter Verwendung einer ursprünglich mit Asbest ummantelten Transportrolle hergestellten erfindungsgemäßen Transportrolle,

Fig. 2: einen Längsschnitt durch eine sich von der Transportrolle gemäß Fig. 1 durch eine andere Lagerung des Mittelteils unterscheidende Transportrolle,

Fig. 3: eine Teilansicht der Transportrolle gemäß Fig. 2,

Fig. 4: eine weitere Transportrolle mit über eine durchgehende Welle miteinander verbundenen Lagerzapfen,

Fig. 5: eine Vorderansicht der Transportrolle gemäß Fig. 4 und

Fig. 6: eine Transportrolle ohne durchgehende Tragwelle.

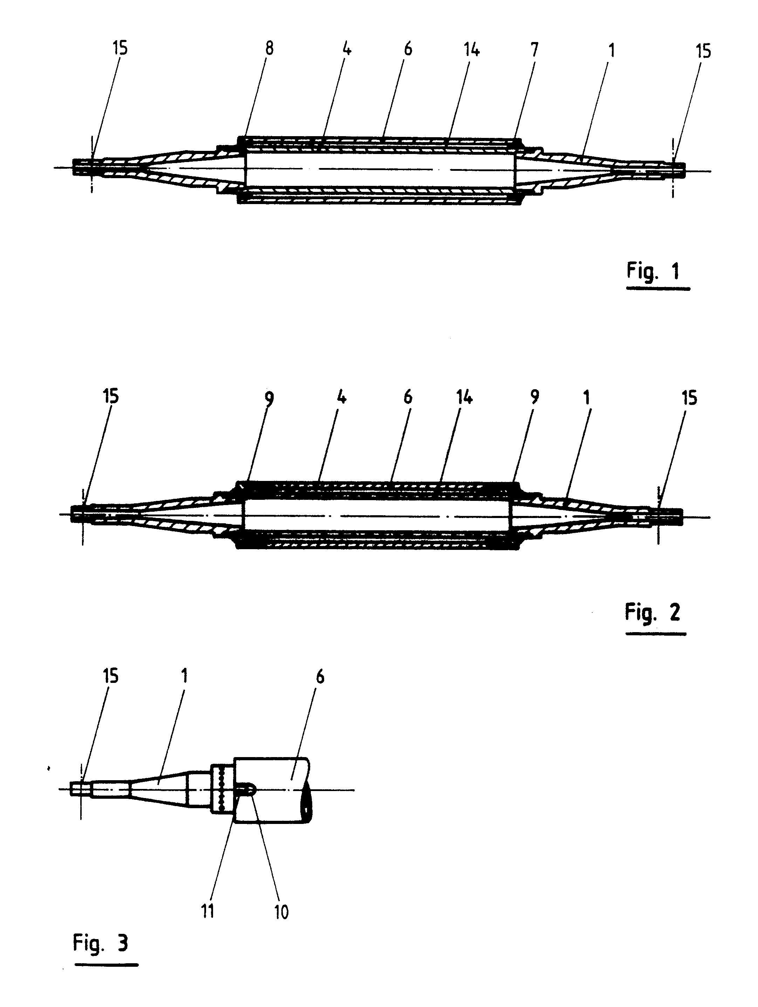

Die Transportrolle gemäß Fig. 1 besteht aus Lagerzapfen 1, die mittels eines Rohres 4 als durchgehende Tragwelle miteinander verbunden sind. Ein rohrförmiges Mittelteil 6 mit größerem Durchmesser ist im Bereich des Rohres 4 mittels Stützringen 7, 8 konzentrisch zu den Lagerzapfen 1 und dem Rohr gehalten. Der Stützring 7 ist sowohl mit dem Rohr 4 als auch mit dem Mittelteil 6 verschweißt, während der Stützring 8 nur mit dem Mittelteil 6 verschweißt und auf dem Rohr 4 axial verschiebbar gelagert ist.

Die Lagerzapfen 1 und das sie verbindende Rohr 4 entsprechen einer üblichen Transportrolle mit Asbestbeschichtung, die jedoch mit Hilfe der Stützringe 7, 8 und des rohrförmigen Mittelteils 6 erfindungsgemäß abgeändert wurde. Zwischen dem Rohr 4 und dem Mittelteil 6 befindet sich ein Ringraum 14, der frei sein, oder aber auch eine hitzebeständige Isolierschicht enthalten kann. Durch die freie Verschiebbarkeit im Bereich des Stützrings 8 und die Isolierschicht im Ringraum 14 werden ungleichmäßige Erwärmungen des Mittelteils 6 von den Lagerzapfen 1 und dem Rohr 4 ferngehalten, so daß dieser Teil der Transportrolle keinen temperaturbedingten Verformungen unterliegt. Temperaturbedingte Dehnungen oder Verformungen des Mittelteils 6 werden wegen der axialen Verschiebbarkeit des Stutzrings 8 nicht auf die Lagerzapfen 1 und das Rohr 4 übertragen, so daß die Transportrolle insgesamt auch wechselnde Temperaturen ohne Nachteile erträgt.

Das Ausführungsbeispiel gemäß Fig. 2 unterscheidet sich von dem Ausführungsbeispiel gemäß Fig. 1 dadurch, daß beide Stützringe 9 mit der Tragwelle aus den Lagerzapfen 1 und dem Rohr 4 verschweißt sind. Beide Enden des Mittelteils 6 sind auf den Stützringen 9 axial verschiebbar gelagert, jedoch gegen ein Verdrehen durch einen Schlitz 10 im Mittelteil 6 und einem Keil 11 am Stützring 9 gesichert.

Die Transportrollen gemäß Fig. 1 bis 3 sind an jedem Ende in einem strichpunktiert angedeuteten Lager 15 gelagert.

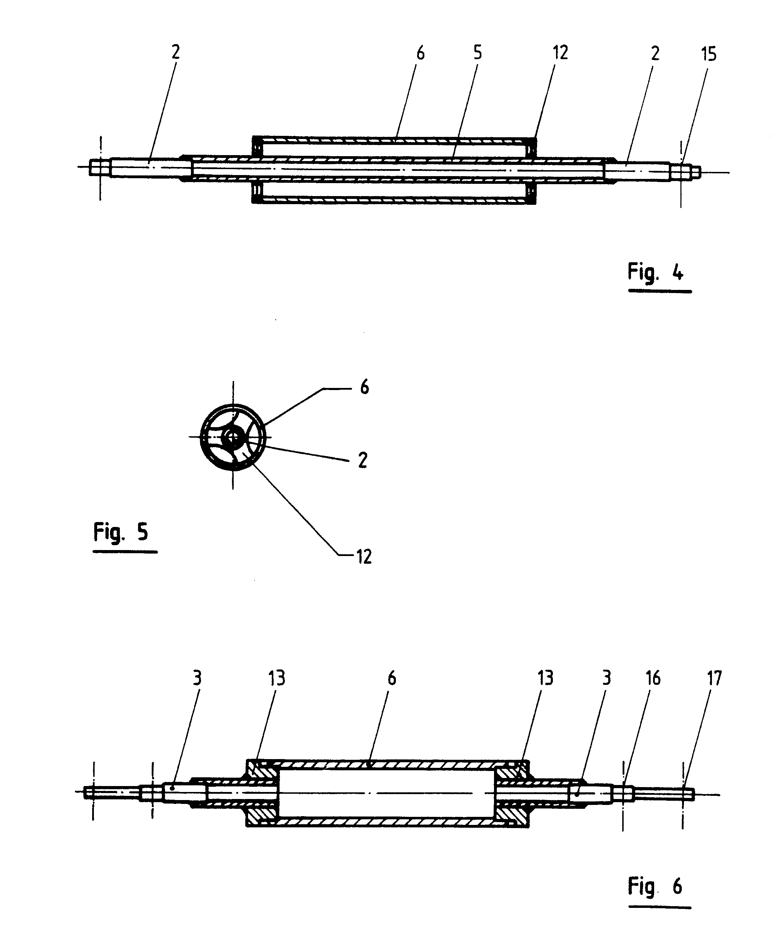

Beim Ausführungsbeispiel gemäß Fig. 4 und 5 sind die Lagerzapfen 2 im wesentlichen zylindrisch ausgebildet und miteinander über eine durchgehende rohrförmige Welle 5 mit verhältnismäßig kleinem Durchmesser verbunden. Das rohrförmige Mittelteil 6 ist mittels an den Enden angeordneter sternförmiger Abstützungen 12 auf der durchgehenden Welle 5 gelagert. Hierdurch ist ein Belüften des Ringraums zwischen dem Mittelteil 6 und der durchgehenden Welle 5 möglich, was zu einer Verbesserung des Temperaturausgleichs führt. Eine der sternförmigen Abstützungen 12 ist sowohl mit der durchgehenden Welle 5 als auch mit dem Mittelteil 6 verschweißt, während die andere sternförmige Abstützung 12 entweder nur mit dem Mittelteil 6 oder nur mit der durchgehenden Welle 5 verschweißt ist, wodurch die axiale Verschiebbarkeit des Mittelteils 6 gegenüber der durchgehenden Welle 5 gewährleistet ist. Auch in diesem Falle ist eine einfache Lagerung der Transportrolle durch die Lager 15 gegeben.

Beim Ausführungsbeispiel gemäß Fig. 6 sind die Lagerzapfen 3 nur über das Mittelteil 6 miteinander verbunden. Aus diesem Grunde ist jeder Lagerzapfen 3 doppelt in einem Lager 16 und einem Lager 17 gelagert. Das Mittelteil 6 stützt sich über Stützringe 13 auf den Lagerzapfen 3 ab, wobei das Mittelteil 6 ähnlich wie beim Ausführungsbeispiel gemäß Fig. 2 und 3 gegenüber beiden Lagerstummeln axial verschiebbar ist, gegen Verdrehen jedoch durch eine Nut-und Keilverbindung oder durch kleeblattartige Verbindungen gesichert ist.

Um die Wärmestrahlung zu verringern, kann das mit dem Glasband in Kontakt kommende Mittelteil 6 mattiert oder mit einer Oxydschicht versehen sein.

**Ansprüche**

1. Transportrolle für Glaskühlkanäle aus zwei Lagerzapfen und einem dazwischen angeordneten zylindrischen Mittelteil, dadurch gekennzeichnet, daß das Mittelteil (6) wenigstens im Bereich eines der Lagerzapfen (1, 2, 3) axial verschiebbar angeordnet ist.

2. Transportrolle nach Anspruch 1, dadurch gekennzeichnet, daß das Mittelteil (6) über im Bereich seiner angeordneten Stützringe (7, 8, 9, 13) mit den Lagerzapfen (1, 2, 3) verbunden ist.

3. Transportrolle nach Anspruch 1, dadurch gekennzeichnet, daß das Mittelteil (6) über sternförmige, im Bereich seiner Enden angeordnete Abstützungen (12) mit den Lagerzapfen (1, 2, 3) verbunden ist.

4. Transportrolle gemäß Anspruch 2 oder 3, dadurch gekennzeichnet, daß wenigstens eine der Abstützungen (7, 8, 9, 12, 13) mit dem Mittelteil (6) axial verschiebbar, aber drehfest verbunden ist.

5. Transportrolle nach einem der Ansprüche 1 bis 4, dadurch gekennzeichnet, daß die Lagerzapfen (1, 2) über eine durchgehende Welle (4, 5) miteinander verbunden sind.

6. Transportrolle nach Anspruch 5, dadurch gekennzeichnet, daß zwischen einem rohrförmigen Mittelteil (6) und der Welle (5, 4) eine Isolierschicht (14) angeordnet ist.

7. Transportrolle nach Anspruch 6, dadurch gekennzeichnet, daß die Isolierschicht aus einem luftgefüllten Ringraum (14) zwischen der Welle (4, 5) und dem Mittelteil (6) besteht.

8. Transportrolle nach Anspruch 6, dadurch gekennzeichnet, daß der Ringraum (14) zwischen der Welle (4, 5) und dem Mittelteil (6) mindestens teilweise mit einem temperaturbeständigen Isoliermaterial gefüllt ist.

9. Transportrolle nach einem der Ansprüche 1 bis 4, dadurch gekennzeichnet, daß die Lagerzapfen (3) unabhängig voneinander doppelt gelagert und nur über das Mittelteil (6) miteinander verbunden sind.

10. Transportrolle nach einem oder mehreren der Ansprüche 1 bis 9, dadurch gekennzeichnet, daß das Mittelteil (6) eine die Wärmestrahlung vermindernde mattierte bzw. mit einem Oxydfilm versehene Oberfläche besitzt.

Fig. 1

Fig. 2

Fig. 3

Fig. 4

Fig. 5

Fig. 6

Europäisches
Patentamt

EUROPÄISCHER RECHERCHENBERICHT

Nummer der Anmeldung

EP 88 10 0654

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-1 074 610 (SCHMIDT & CLEMENS) * Insgesamt * --- | 1,4 | C 03 B 35/18 F 27 D 3/02 F 27 B 9/24 B 65 G 39/02 |
| X | DE-B-1 073 949 (HERAEUS QUARTZSCHMELZE) * Insgesamt * --- | 1 | |
| A | DE-A-1 527 650 (MANTHEY) * Insgesamt * --- | 1-10 | |
| A | DE-B-1 240 539 (AMERICAN BRAKE SHOE CO.) * Figur 3 * --- | 1-10 | |
| A | US-A-3 860 387 (BRICMONT) * Insgesamt * ----- | 1-10 | |

**RECHERCHIERTE SACHGEBIETE (Int. Cl.4)**

C 03 B 35/00
F 27 D 3/00
F 27 B 9/00
B 65 G 39/00

Der vorliegende Recherchenbericht wurde für alle Patentansprüche erstellt

| Recherchenort | Abschlußdatum der Recherche | Prüfer |
|---|---|---|
| DEN HAAG | 17-05-1988 | VAN DEN BOSSCHE W.L. |